# EUROPÄISCHE PATENTSCHRIFT

(11) **EP 1 573 240 B1**
(45) Veröffentlichungstag und Bekanntmachung des Hinweises auf die Patenterteilung: **26.07.2006**
(21) Anmeldenummer: 03813533.1
(22) Anmeldetag: 16.12.2003
(51) Int. Cl.: F16K 1/226

(54) **VENTIL**
VALVE
SOUPAPE

(30) Priorität: 20.12.2002 DE 10260252
(43) Veröffentlichungstag der Anmeldung: 14.09.2005
(73) Patentinhaber: SIEMENS AKTIENGESELLSCHAFT, 80333 München (DE)
(72) Erfinder: BORNMANN, Gerd, 65239 Hochheim (DE); KOHLEN, Peter, 61267 Neu-Anspach (DE); RENNEN, Michael, 65812 Bad Soden (DE)
(86) Internationale Anmeldenummer: PCT/DE2003/004154
(87) Internationale Veröffentlichungsnummer: WO 2004/057219

(56) Entgegenhaltungen:
- EP-A- 1 096 180
- DE-A- 3 800 705
- US-A- 5 326 077

## Beschreibung

Die Erfindung bezieht sich auf ein Ventil sowie auf eine Verwendung des Ventils. Ventile, beispielsweise für Gaskanäle, sind bekannt. Sie bestehen oftmals aus einem Gehäuse mit einem Ventilsitz, in welchem eine drehbar angeordnete Klappe zum Verschließen des Gaskanals angeordnet ist. Zur Vermeidung von Leckluft wird die Klappe dabei mit einer außen umlaufenden Kolbendichtung versehen. Diese besteht in der Regel aus einem Metallring, der aus Gründen der Nachgiebigkeit einen Spalt aufweist. Im Betrieb entsteht dadurch der Nachteil, dass sich dieser Spalt oftmals nicht vollständig schließen lässt, so dass durch diesen Spalt Leckluft geführt wird, was nicht erwünscht ist.

DE 3800705 A1 offenbart eine Dichtungsanordnung für Absperrklappen.

Der Erfindung liegt daher die Aufgabe zugrunde, ein Ventil zu schaffen, bei dem die Bildung von Leckluft weitgehend vermieden werden kann. Ein sicheres Verschließen des Gaskanals soll somit auch bei höheren und schwankenden Temperaturen des Gases weitgehend gewährleistet sein.

Die der Erfindung zugrundeliegende Aufgabe wird durch ein Ventil gelöst, das aus einem Gehäuse mit einem Ventilsitz und einer zweiteiligen Klappe, die an einer Antriebswelle drehbar gelagert ist, besteht, bei dem außen umlaufend, zwischen dem ersten Teil und dem zweiten Teil der zweiteiligen Klappe ein Kolbendichtring und eine Deckscheibe benachbart angeordnet sind, wobei der Durchmesser der Deckscheibe kleiner ist als der Durchmesser des Kolbendichtringes, der als Metallring mit einem Spalt ausgeführt ist. Der Ventilsitz kann dabei beispielsweise selbst ein Teil des Gehäuses sein. Die Klappe ist in der Regel kreisrund ausgeführt und besteht beispielsweise aus Stahl. Sie ist zweiteilig ausgeführt, damit die Deckscheibe, welche die Form einer Unterlegscheibe hat, zwischen dem ersten Teil und dem zweiten Teil der zweiteiligen Klappe positioniert werden kann. Der erste Teil und der zweite Teil können beispielsweise kreisrund und scheibenförmig ausgebildet sein. Eine Verbindung des ersten Teils mit dem zweiten Teil der zweiteiligen Klappe kann beispielsweise durch Verschrauben, Vernieten oder Verschweißen erfolgen. Beim Verschweißen kann es dabei hilfreich sein, zwischen dem ersten Teil und dem zweiten Teil ein Zwischenstück aus Metall anzuordnen. In einigen Fällen ist es auch möglich, den ersten Teil mit dem zweiten Teil zu verkleben. Der Kolbendichtring ist als flacher Metallring ausgebildet. Er weist einen Spalt auf, der auch als Stoßspiel bezeichnet wird und ein flexibles Nachgeben des Kolbendichtringes im Ventilsitz ermöglicht. Der Durchmesser der Deckscheibe ist kleiner ausgeführt als der Durchmesser des Kolbendichtringes. Dadurch wird in vorteilhafter Weise erreicht, dass die Deckscheibe nicht im Ventilsitz verklemmen kann. Es hat sich in überraschender Weise gezeigt, dass eine Bildung von Leckluft weitgehend vermieden werden kann, sofern der Spalt des Kolbendichtringes nahezu vollständig durch die benachbart angeordnete Deckscheibe abgedichtet wird. Dadurch wird in vorteilhafter Weise verhindert, dass Leckluft durch den Spalt des Kolbendichtringes geführt werden kann. Dies ist besonders dann vorteilhaft, sofern die durch das Ventil zu leitenden Gase höhere Temperaturen aufweisen und in ihrer Temperatur stark schwanken.

Eine bevorzugte Ausgestaltung der Erfindung besteht darin, dass der Durchmesser der Deckscheibe um 0,1 bis 0,2 mm kleiner ist als der Durchmesser des Kolbendichtringes. Dadurch wird die Kombination der Vorteile "Vermeidung der Leckluft" und "Vermeidung eines Verklemmens der Deckscheibe" optimiert.

Gemäß einer weiteren bevorzugten Ausgestaltung der Erfindung sind der erste Teil und der zweite Teil der zweiteiligen Klappe identisch und als Kreiszylinder mit einem, an einer Querseite des Kreiszylinders angeordneten, kreisförmig begrenzten Vorsprung ausgeführt. Der kreisförmig begrenzte Vorsprung ist dabei ebenfalls als flacher Kreiszylinder ausgeführt, hat somit die Form einer Scheibe. In vorteilhafter Weise werden der erste Teil und der zweite Teil mit dem jeweils kreisförmig begrenzten Vorsprung als Einzelteil gefertigt. Dabei ist vorteilhaft, dass der erste Teil und der zweite Teil nach dem exakt gleichen Herstellungsverfahren hergestellt werden können. Die Form des Kreiszylinders, mit dessen einer Stirnfläche der erste Teil und der zweite Teil jeweils aneinander fluchten, ermöglicht darüber hinaus eine relativ einfache Verbindung des ersten Teils mit dem zweiten Teil durch Schweißen.

Eine weitere bevorzugte Ausgestaltung der Erfindung besteht darin, dass der erste Teil oder der zweite Teil der zweiteiligen Klappe, der unmittelbar an die Deckscheibe angrenzt, an seiner äußeren Kante benachbart angeordnete Aussparungen aufweist. Diese Aussparungen können in der Draufsicht beispielsweise halbkreisförmig begrenzt sein. Im Betrieb kommt es zwischen dem Kolbendichtring und dem ersten Teil oder dem zweiten Teil der zweiteiligen Klappe in der Regel zu Verschmutzungen, bedingt durch Abrieb zwischen den einzelnen Teilen oder durch Verunreinigungen in den Gasen. Diese Verschmutzung muss automatisch abgeführt werden. Die Anordnung der Aussparungen ermöglicht den Austrag dieser Verschmutzungen nach außen, so dass eine relativ gute Abdichtung des Ventils auch nach längeren Betriebszeiten gewährleistet ist.

Gemäß einer weiteren Ausgestaltung der Erfindung verlaufen die Aussparungen in der Draufsicht parabelförmig. Dabei ist vorteilhaft, dass die Verschmutzungen relativ schnell ausgetragen werden können, so dass sich größeren Ansammlungen von den Verschmutzungen von vorn herein vermeiden lassen.

Eine weitere bevorzugte Ausgestaltung der Erfindung besteht darin, dass die Deckscheibe innen verlaufend ein Verzahnungsprofil aufweist. Beispielsweise können dabei als Deckscheibe federnde Zahnscheiben nach DIN 6797 oder DIN 5461 eingesetzt werden. Dadurch wird in vorteilhafter Weise das Austragen von Verschmutzungen zusätzlich durch die Deckscheibe erleichtert.

Gegenstand der Erfindung ist schließlich noch die Verwendung des Ventils als Gasrückführventil eines Kraftfahrzeuges. Die durch ein Gasrückführventil eines Kraftfahrzeuges geleiteten Gase weisen in der Regel hohe Temperaturen und hohe Temperaturschwankungen auf. Die Bildung von Leckluft ist dabei zu vermeiden, so dass der Einsatz des erfindungsgemäßen Ventils hier als besonders vorteilhaft anzusehen ist.

Die Erfindung wird nachfolgend anhand der Zeichnung (Fig. 1 bis Fig. 5) näher und beispielhaft erläutert.
- Fig. 1: zeigt das Ventil im Querschnitt.
- Fig. 2: zeigt die zweiteilige Klappe im Querschnitt mit der Deckscheibe und dem Kolbendichtring in schematisch vereinfachter Form.
- Fig. 3: zeigt die Anordnung des Ventils als Gasrückführventil in einem Kraftfahrzeug gemäß Detail A in Fig. 1.
- Fig. 4: zeigt die Draufsicht auf eine Deckscheibe.
- Fig. 5: zeigt die Draufsicht auf einen zweiten Teil der zweiteiligen Klappe.

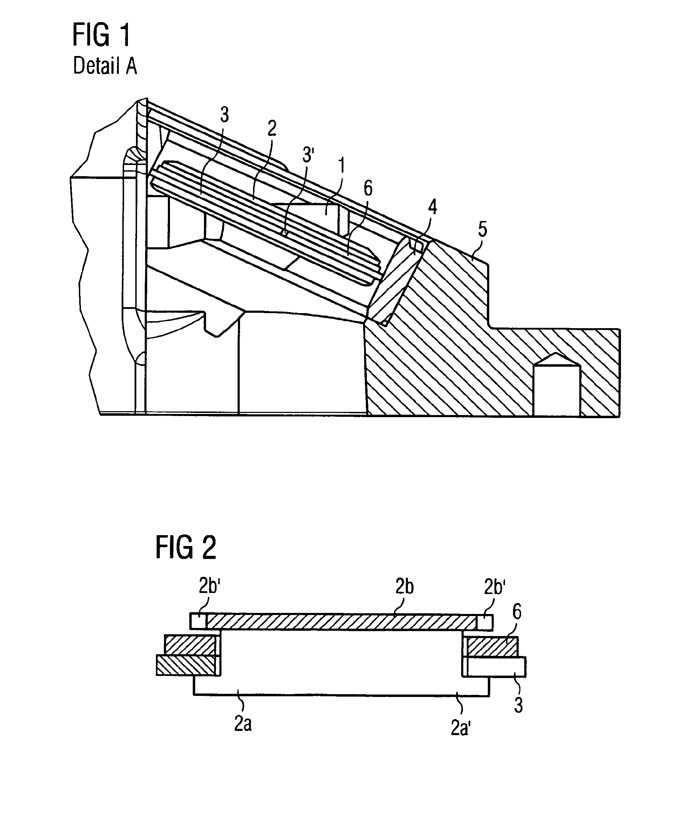

In Fig. 1 ist das Ventil im Querschnitt schematisch und vereinfacht dargestellt. Das Ventil besteht aus einem Gehäuse 5 mit einem Ventilsitz 4 und einer zweiteiligen Klappe 2, die an einer Antriebswelle 1 drehbar gelagert ist. Um die zweiteilige Klappe 2 sind ein Kolbendichtring 3 und eine Deckscheibe 6 benachbart angeordnet, wobei der Durchmesser der Deckscheibe 6 kleiner ist als der Durchmesser des Kolbendichtringes 3, der als Metallring mit einem Spalt 3' ausgeführt ist. In besonders vorteilhafter Weise ist der Durchmesser der Deckscheibe 6 um 0,1 bis 0,2 mm kleiner als der Durchmesser des Kolbendichtringes 3. Die Anordnung der Deckscheibe 6 verhindert weitgehend, dass Leckluft von der einen Seite der zweiteiligen Klappe 2 über den Spalt 3' des Kolbendichtringes 3 auf die andere Seite der zweiteiligen Klappe 2 und umgekehrt gelangen kann. Dies wird durch ein nahezu vollständiges Abschließen des Spaltes 3' durch die benachbart angeordnete Deckscheibe 6 verhindert.

In Fig. 2 ist eine zweiteilige Klappe im Querschnitt schematisch und vereinfacht dargestellt. Die zweiteilige Klappe besteht aus einem ersten Teil 2a und einem zweiten Teil 2b. Der erste Teil 2a ist als Kreiszylinder mit einem, an einer Querseite des Kreiszylinders angeordneten, kreisförmig begrenzten Vorsprung 2a' ausgeführt, wobei der erste Teil 2a und der kreisförmige Vorsprung 2a' aus einem Einzelteil bestehen. Der zweite Teil 2b der zweiteiligen Klappe hat die Form einer kreisrunden Scheibe. Der erste Teil 2a und der zweite Teil 2b der zweiteiligen Klappe können beispielsweise durch Verschweißen miteinander verbunden werden. Der zweite Teil 2b, der unmittelbar an die Deckscheibe angrenzt, weist an seiner äußeren Kante benachbart angeordnet Aussparungen 2b' auf. Sie dienen dem Austrag von Verschmutzungen, die sich im Betrieb zwischen dem Kolbendichtring 3 und dem ersten Teil 2a der zweiteiligen Klappe bilden. In der Regel ist es besonders vorteilhaft, sowohl den ersten Teil 2a als auch den zweiten Teil 2b der zweiteiligen Klappe identisch als Kreiszylinder mit einem, an der Querseite des Kreiszylinders angeordneten, kreisförmig begrenzten Vorsprung 2a' zu fertigen (nicht dargestellt), was allgemein die Herstellung des Ventils vereinfacht.

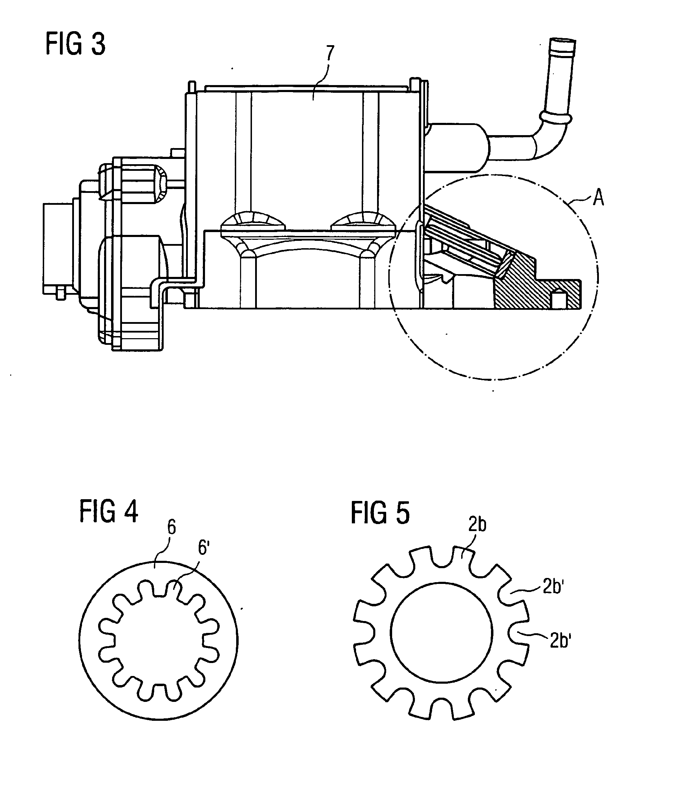

In Fig. 3 ist das Ventil gemäß Detail A in Fig. 1 als Gasrückführventil dargestellt. Das als Gasrückführventil angeordnete Ventil befindet sich direkt neben dem Frischluftkanal 7, dem die Abgase des Kraftfahrzeuges teilweise über das Ventil zugeleitet werden.

In Fig. 4 ist eine Deckscheibe 6 in der Draufsicht dargestellt. Die Deckscheibe 6 weist innen verlaufend ein Verzahnungsprofil 6' auf. Die Anordnung eines solchen Verzahnungsprofils 6' in der Deckscheibe erleichtert zusätzlich den Austrag von sich bildenden Verschmutzungen.

In Fig. 5 ist ein zweiter Teil 2b der zweiteiligen Klappe 2 in der Draufsicht dargestellt. An seiner äußeren Kante sind dabei benachbart angeordnete Aussparungen 2b' angeordnet, die in der Draufsicht parabelförmig verlaufen. Durch sie kann ein relativ schneller Austrag von Verschmutzungen erfolgen.

## Patentansprüche

1. Ventil, das aus einem Gehäuse (5) mit einem Ventilsitz (4) und einer zweiteiligen Klappe (2), die an einer Antriebswelle (1) drehbar gelagert ist, besteht, bei dem außen umlaufend, zwischen dem ersten Teil (2a) und dem zweiten Teil (2b) der zweiteiligen Klappe (2) ein Kolbendichtring (3) und eine Deckscheibe (6) benachbart angeordnet sind, wobei der Durchmesser der Deckscheibe (6) kleiner ist als der Durchmesser des Kolbendichtringes (3), der als Metallring mit einem Spalt (3') ausgeführt ist.

2. Ventil nach Anspruch 1, bei dem der Durchmesser der Deckscheibe (6) um 0,1 bis 0,2 mm kleiner ist als der Durchmesser des Kolbendichtringes (3).

3. Ventil nach Anspruch 1 oder Anspruch 2, bei dem der erste Teil (2a) und der zweite Teil (2b) der zweiteiligen Klappe (2) identisch und als Kreiszylinder mit einem, an einer Querseite des Kreiszylinders angeordneten, kreisförmig begrenzten Vorsprung (2a') ausgeführt sind.

4. Ventil nach einem der Ansprüche 1 bis 3, bei dem der erste Teil (2a) oder der zweite Teil (2b) der zweiteiligen Klappe (2), der unmittelbar an die Deckscheibe (6) angrenzt, an seiner äußeren Kante benachbart angeordnete Aussparungen (2b') aufweist.

5. Ventil nach Anspruch 4, bei dem die Aussparungen (2b') in der Draufsicht parabelförmig verlaufen.

6. Ventil nach einem der Ansprüche 1 bis 5, bei dem die Deckscheibe (6) innen verlaufend ein Verzahnungsprofil (6') aufweist.

7. Verwendung des Ventils nach einem der Ansprüche 1 bis 6 als Gasrückführventil eines Kraftfahrzeuges.

## Claims

1. Valve which comprises a housing (5) having a valve seat (4) and a two-part flap (2) which is mounted rotatably on a drive shaft (1), in which a piston sealing ring (3) and a cover disc (6) are arranged adjacently and outwardly circumferentially between the first part (2a) and the second part (2b) of the two-part flap (2), the diameter of the cover disc (6) being smaller than the diameter of the piston sealing ring (3) which is configured as a metal ring with a gap (3').

2. Valve according to Claim 1, in which the diameter of the cover disc (6) is smaller by from 0.1 to 0.2 mm than the diameter of the piston sealing ring (3).

3. Valve according to Claim 1 or Claim 2, in which the first part (2a) and the second part (2b) of the two-part flap (2) are configured identically and as circular cylinders having a circularly limited projection (2a') which is arranged on a transverse side of the circular cylinder.

4. Valve according to one of Claims 1 to 3, in which the first part (2a) or the second part (2b) of the two-part flap (2) which is immediately adjacent to the cover disc (6) has cut-outs (2b') which are arranged adjacently on its outer edge.

5. Valve according to Claim 4, in which the cut-outs (2b') extend in a parabola shape as seen in plan view.

6. Valve according to one of Claims 1 to 5, in which the cover disc (6) has a serrated profile (6') extending inwardly.

7. Use of the valve according to one of Claims 1 to 6 as a gas recirculation valve of a motor vehicle.

## Revendications

1. Soupape, composée d'une cage de soupape (5) avec un siège de soupape (4) et d'un clapet (2) en deux parties, qui est monté en rotation sur un arbre de commande (1), où un segment de piston (3) et une plaque de recouvrement (6) extérieurement circulaires sont disposés l'un à coté de l'autre entre la première partie (2a) et la deuxième partie (2b) du clapet (2) en deux parties, le diamètre de la plaque de recouvrement (6) étant inférieur au diamètre du segment de piston (3), lequel est conçu comme bague métallique avec une fente (3').

2. Soupape selon la revendication 1, où le diamètre de la plaque de recouvrement (6) est inférieur de 0,1 à 0,2 mm au diamètre du segment de piston (3).

3. Soupape selon la revendication 1 ou la revendication 2, où la première partie (2a) et la deuxième partie (2b) du clapet (2) en deux parties sont identiques et sont exécutées sous la forme d'un cylindre circulaire avec un épaulement (2a') ménagé sur une face transversale du cylindre circulaire et limité circulairement.

4. Soupape selon l'une des revendications 1 à 3, où la première partie (2a) ou la deuxième partie (2b) du clapet (2) en deux parties, qui est directement voisine de la plaque de recouvrement (6), comporte des évidements (2b') disposés l'un à coté de l'autre sur son arête extérieure.

5. Soupape selon la revendication 4, où les évidements (2b') ont, vus de dessus, la forme d'une parabole.

6. Soupape selon l'une des revendications 1 à 5, où la plaque de recouvrement (6) a un profil à denture (6') se développant vers l'intérieur.

7. Utilisation de la soupape selon l'une des revendications 1 à 6 en tant que soupape de retour des gaz d'un véhicule automobile.
